# FASCICULE DE BREVET EUROPEEN

(11) **EP 1 029 312 B1**
(45) Date de publication et mention de la délivrance du brevet: **12.09.2001**
(21) Numéro de dépôt: 98952832.8
(22) Date de dépôt: 02.11.1998
(51) Int. Cl.: G07F 7/10, G06F 12/14

(54) **PROCEDE DE GESTION SECURISE D'UNE MEMOIRE**
GESICHERTES SPEICHERVERWALTUNGSVERFAHREN
METHOD FOR SECURE STORAGE MANAGEMENT

(30) Priorité: 07.11.1997 FR 9714054
(43) Date de publication de la demande: 23.08.2000
(73) Titulaire: GEMPLUS, 13881 Gémenos Cédex (FR)
(72) Inventeur: BRUN, Philippe, F-13600 La Ciotat (FR); COULIER, Charles, F-13360 Roquevaire (FR)
(86) Numéro de dépôt international: FR9802336
(87) Numéro de publication internationale: WO9924944

(56) Documents cités:
- EP-A- 0 152 024
- WO-A-88/09019
- FR-A- 2 628 555
- US-A- 4 734 568

## Description

La présente invention a pour objet un procédé de gestion sécurisé d'une mémoire, notamment, d'une mémoire d'une carte à puce en relation avec un terminal. Elle pourrait néanmoins s'appliquer à toute autre type de mémoire. L'invention est particulièrement utile quand, pour la gestion de la sécurité de la mémoire, il est nécessaire de veiller à préserver la capacité de mémorisation de la mémoire. Le principal problème à résoudre en effet est celui de l'occupation en mémoire du système mis en oeuvre pour protéger les fichiers.

L'invention sera particulièrement décrite dans le cas d'une application à une carte à puce. Elle est néanmoins transposable en totalité à d'autres domaines. Il est connu, notamment dans le domaine de la carte à puce, d'organiser la sécurité d'une transaction entre un système d'exploitation et des fichiers selon différents modes. On reviendra par la suite en détail sur ces modes. On peut admettre, pour l'instant, qu'il existe des modes de protection par codes secrets, par authentification, ou par sécurisation de messages. Par ailleurs il y a plusieurs types de traitement auxquels peuvent être soumis les fichiers. Essentiellement ils peuvent être lus. Ils peuvent être également écrits et effacés. Il est également possible d'envisager la création ou la suppression d'un fichier. Un fichier peut par ailleurs être invalidé en totalité. Par la suite il peut être réhabilité. Dans des applications de type porte-monnaie électronique, où le fichier représente un montant monétaire, ce montant peut être débité ou crédité. Au-delà de ces sept fonctions, on peut prévoir d'autres fonctions. Ainsi, si des opérations de débit ou de crédit dans une application porte-monnaie de carte à puce sont envisagées, on peut prévoir une fonction de lecture de balance qui reprendrait en totalité les opérations de débit et crédit précédentes pour élaborer un solde. On peut prévoir également dans le même domaine des opérations de débit plafonné: le débit n'est autorisé que s'il est inférieur à un plafond.

Dans la suite de cet exposé, afin de clarifier l'explication, et parce que par ailleurs une telle présentation correspond à un usage préféré et le plus fréquent, on se limitera à trois modes de sécurité et à sept fonctions susceptibles de provoquer des modifications sur des fichiers.

Dans l'état de la technique, lors de la conception d'un système d'exploitation ou plus généralement d'un système de gestion d'une mémoire, il est prévu que chaque fichier soit associé à un descripteur de fichier. Avant d'agir sur un fichier, le système d'exploitation, ou le système de gestion, va lire le contenu du descripteur et se limite dans ses actions aux contraintes imposées par le descripteur de fichier. Dans le domaine de la micro-informatique, le système de gestion est constitué d'un ensemble de logiciels. Dans le domaine des cartes à puce, le système d'exploitation correspondant est réalisé sous forme matérielle de façon à empêcher qu'un fraudeur puisse, en en changeant la nature, changer tout le mode protection qui a été échafaudé.

Lors de la conception d'un système d'exploitation, chaque fichier étant susceptible d'être protégé selon les modes envisagés (trois) pour chaque fonction envisagée (sept), le nombre de mots mémoire que doit contenir un descripteur de fichier pour correspondre à toutes les éventualités est élevé. Dans l'exemple cité, ce nombre est de 21 (3 x 7). Si on considère qu'on a dans une carte à puce jusqu'à une vingtaine de fichiers, le nombre des mots mémoires nécessaires pour constituer le descripteur général est élevé. Dans l'exemple, il vaudrait 420. Si on attribue un octet pour chacun de ces mots mémoires, on est conduit, sur une mémoire dont la taille serait de l'ordre de 1 kilooctets à attribuer presque la moitié de cette taille au descripteur de fichier. C'est beaucoup trop.

Dans une carte à puce, chaque élément d'information stocké est un fichier, qu'il s'agisse, du code secret, d'une information de crédit, d'une information de débit, d'une identité de la carte, d'un numéro de série de la carte et ainsi de suite. Le problème de la minimisation de la taille des descripteurs est particulièrement ressenti dans le domaine des cartes à puce puisque, si la taille de la mémoire augmente, la dimension physique de la puce elle-même augmente. or une puce étant enchâssée dans une carte, elle est soumise à des contraintes mécaniques par le porteur. Elle peut être pliée, soumise à des flexions de nombreuses fois. La puce peut finir par se casser. Elle se casse d'autant plus facilement qu'elle est grande. Par ailleurs, il en résulte un prix élevé pour le composant et pour l'encartage.

L'invention qui a pour but de remédier à l'occupation excessive des descripteurs de fichier dans une mémoire est particulièrement intéressante dans le domaine des cartes à puce. Elle est néanmoins toujours intéressante quand il s'agit de réduire la place occupée inutilement.

Pour résoudre ces problèmes, il a été envisagé dans l'état de la technique de concevoir des systèmes d'exploitation figés: c'est-à-dire dédiés à une application donnée (FR-A-2 628 555). L'inconvénient présenté par une telle solution est que la solution retenue, une fois déterminée, n'est pas susceptible d'aménagement ultérieur. Si on veut modifier quoi que ce soit, il faut refaire tout le système d'exploitation. En contrepartie, la mise à disposition des utilisateurs d'un système opératoire souple se heurte à l'occupation en mémoire des descripteurs de fichier.

Dans l'invention, on a prévu de remédier à ce problème d'occupation en mémoire en constatant que, si certains fichiers nécessitaient pour certaines opérations des modes de sécurité précis, d'autres n'en requéraient aucun. Dans l'invention on a utilisé cette particularité pour constituer des descripteurs à occupation en volume variable de la mémoire. On montrera qu'avec le procédé de l'invention, on obtient un gain d'au moins 50% de place et, dans la plupart des cas, un gain d'au moins 80%.

Dans l'invention, on divise le descripteur en deux parties. Une première partie est réservée aux modes de sécurité. Elle est de longueur fixe. Son occupation en mots mémoires de mode est proportionnelle au nombre de modes envisagés. Une seconde partie concerne des mots mémoires de fonction. Les mots mémoires de fonction ne sont présents dans la deuxième partie que s'ils sont appelés dans la première partie.

L'invention a donc pour objet un procédé de gestion sécurisée d'une mémoire dans lequel
- on affecte à des fichiers de la mémoire des descripteurs de fichiers,
- ces descripteurs de fichiers contiennent des informations de modes de sécurité auxquels il faut souscrire pour appliquer des fonctions de traitement à des données enregistrées dans les fichiers,
- et on gère la sécurité des fichiers de la mémoire en fonction du contenu de ces descripteurs de fichiers, caractérisé en ce que
- on répartit les modes de sécurité en M types distincts et on répartit les fonctions en N types distincts,
- on crée dans le descripteur de chaque fichier un premier groupe de M mots mémoires de mode, la longueur en bits des mots mémoires de mode étant au moins égale au nombre N de types distincts de fonctions,
- les fonctions sont rangées selon un ordre, les rangs des bits dans les mots mémoires de mode correspondent à cet ordre,
- les bits des mots mémoires de mode sont portés à un état actif ou inactif selon qu'un mode de sécurité doit ou ne doit pas être mis en oeuvre lors de l'application d'une fonction à un fichier concerné par un descripteur.

L'invention sera mieux comprise à la lecture de la description qui suit et à l'examen des figures qui l'accompagnent. Celles-ci ne sont données qu'à titre indicatif et nullement limitatif de l'invention. Les figures montrer:
- Figure 1: une représentation, non limitative, de l'application de l'invention à une transaction entre une carte à puce et un terminal;
- Figure 2: l'architecture d'un système d'exploitation, de préférence contenu dans la puce, utilisé pour mettre en oeuvre le procédé de l'invention;
- Figures 3a à 3c: des représentations de modes de sécurité envisagés dans un exemple de l'invention;
- Figure 4: un organigramme d'actions mises en oeuvre dans le procédé de l'invention.

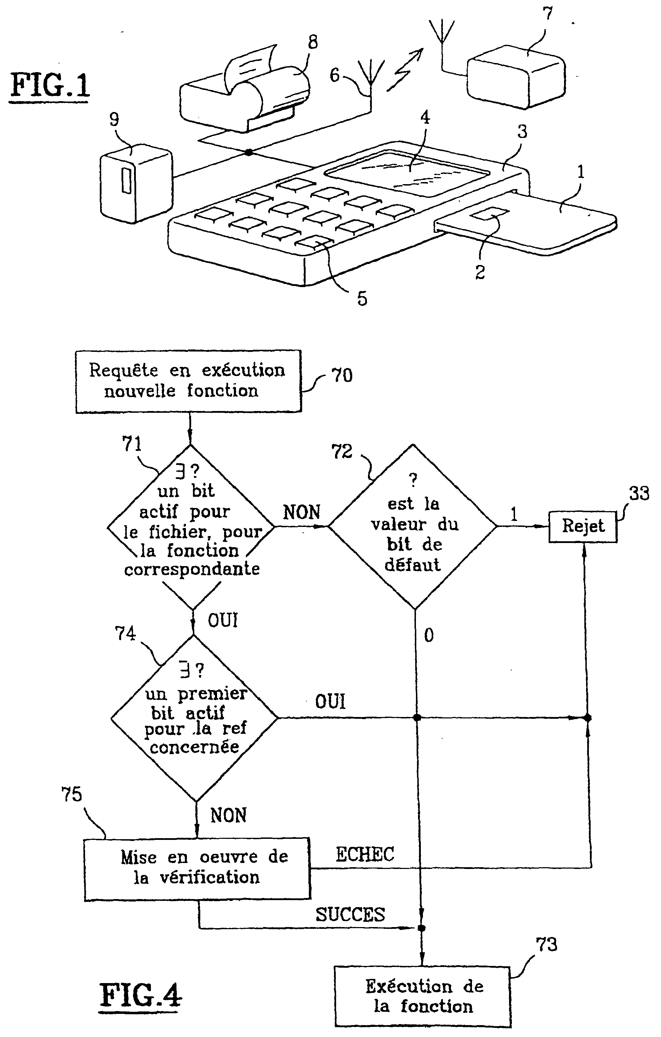

La figure 1 montre une carte à puce 1 munie d'une puce 2 qui entre en relation avec un lecteur 3. Le lecteur 3 est un terminal muni généralement d'un écran 4 et d'un clavier 5 pour permettre à un opérateur d'obtenir la satisfaction d'un besoin. Par exemple, le lecteur 4 est relié par des moyens de liaison 6 (une liaison hertzienne dans l'exemple) avec une unité centrale 7 pour échanger les informations. Par exemple cette unité centrale est le service de gestion d'une banque. Dans un autre exemple, le terminal 3 est en relation avec une imprimante 8 qui imprime le résultat d'une transaction financière provoquée par l'opérateur. Ou encore, le terminal 3 est en relation avec un distributeur de biens ou de services 9, par exemple un distributeur de boissons.

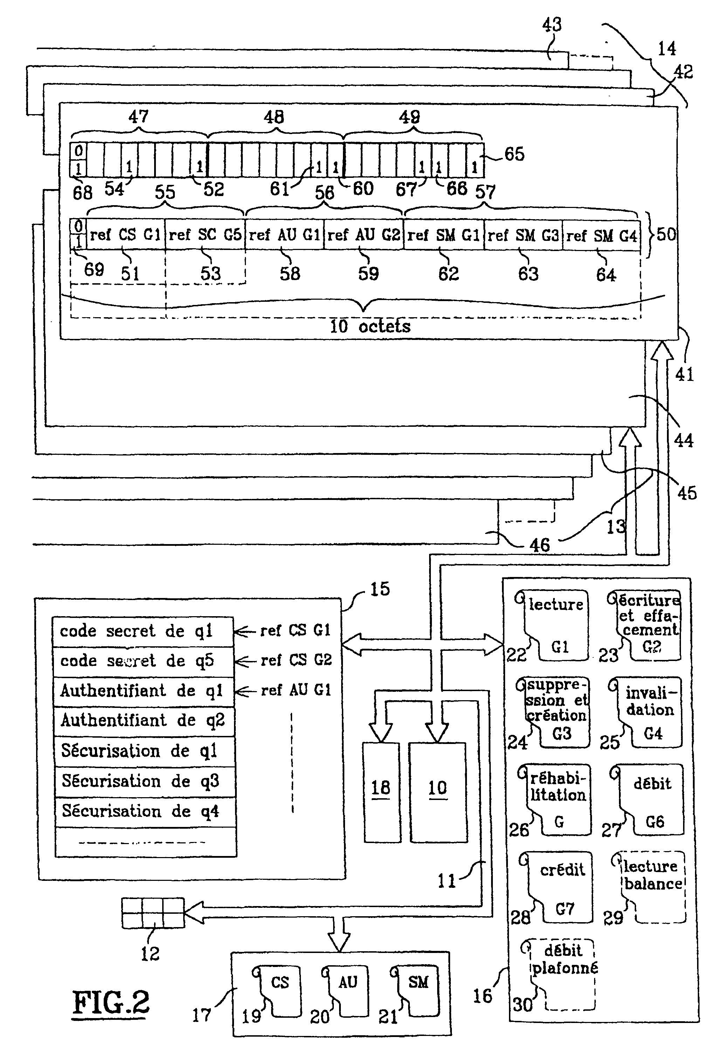

La figure 2 montre l'architecture de la puce 2 et de son système d'exploitation. La puce 2 comporte principalement dans un circuit intégré, un microprocesseur 10 en relation par un bus 11 de données, d'adresses et de commande, avec une interface d'entrée-sortie 12. L'interface 12 sert à entrer en relation avec le lecteur 3. Le microprocesseur 10 est encore en relation par l'intermédiaire du bus 11 avec un ensemble 13 de fichiers dont l'utilisation est conditionnée par un ensemble 14 de descripteurs. Les fichiers 13 peuvent comporter tous les fichiers envisagés jusqu'à présent. Ils peuvent également concerner un fichier 15 de codes secrets dont on verra l'utilisation ultérieurement et qui est ici différencié uniquement pour des raisons de simplification d'explication. La puce comporte encore un ensemble de programmes mémorisés dans des mémoires programmes 16 et 17 représentant respectivement une mémoire de fonctions utilisables pour traiter les fichiers, et une mémoire de modes de sécurité lors de l'application de ces fonctions aux fichiers. Cette séparation entre la mémoire 16 et la mémoire 17 est uniquement utilisée pour des raisons de simplification de l'explication. Dans la pratique le microprocesseur 10 peut être muni d'une seule mémoire programme, l'ensemble des programmes étant même compilé en un seul programme général.

Le fonctionnement du système est le suivant: les programmes sont chargés à partir d'une mémoire 16 et 17 dans une mémoire de travail 18 en commun avec des informations provenant des fichiers 13 à 15 sur lesquels les traitements doivent être effectués. Le microprocesseur 10 exécute sur ces données les traitements impliqués par les programmes.

Dans le domaine de la carte à puce, les fichiers 13 à 15 seront de préférence stockés dans une mémoire de type programmable et effaçable, non volatile, alors que les programmes des mémoires 16 et 17 pourront avoir été stockés dans des mémoires seulement programmables. Néanmoins pour des raisons d'évolution, ces dernières peuvent être également programmables et effaçables.

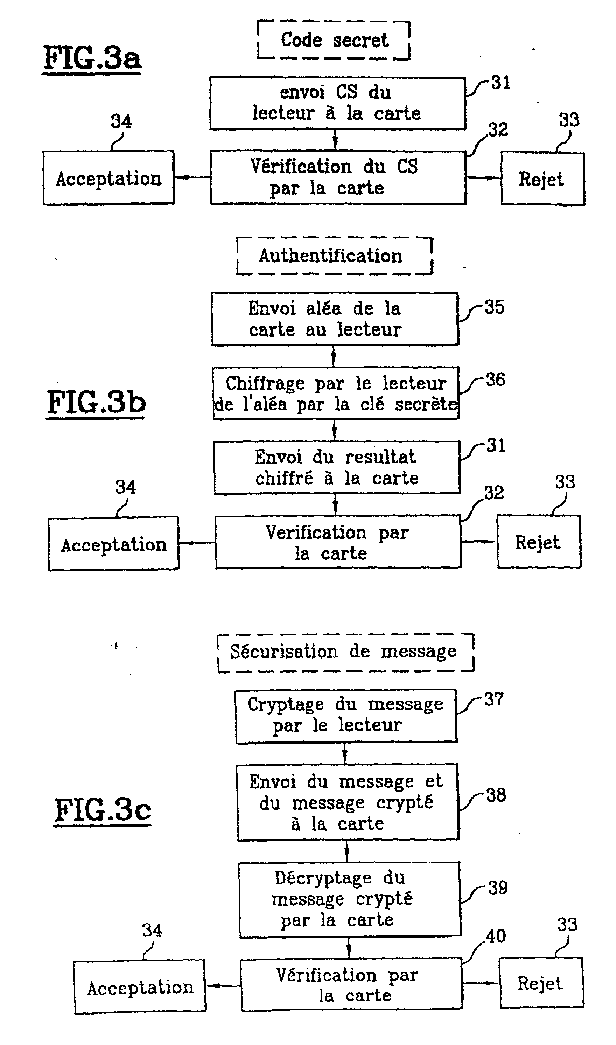

Les figures 3a à 3c montrent des modes de protection intitulés, arbitrairement et respectivement, Code secret, Authentification, et Sécurisation de messages. Ces modes de protection sont par ailleurs associés à des programmes respectivement CS, AU et SM, 19 à 21, de la mémoire 17 de modes. Il y a trois modes de sécurité comme évoqué ci-dessus.

Parmi les fonctions applicables aux fichiers, on distinguera respectivement, dans un exemple, les fonctions 22 à 28 de lecture, écriture et effacement, suppression et création, invalidation, réhabilitation, débit et crédit. A ces sept fonctions on peut ajouter d'autres fonctions comme la fonction 29 de lecture de balance et la fonction 30 de débit plafonné. Néanmoins, dans la suite de l'exposé on se satisfera des sept fonctions 22 à 28 pour des raisons qui seront évoquées plus loin.

Les fonctions ainsi que les modes correspondent en fait à des successions d'instructions qui doivent être chargées par le microprocesseur 10 dans la mémoire de travail 18 pour les exécuter et contribuer ainsi à l'exécution de la formalité qu'ils représentent.

Plutôt que d'identifier chacune des fonctions séparément, on peut les grouper en des groupes de fonctions correspondant à des profils d'utilisateurs qui auront à exécuter les fonctions correspondantes. Auquel cas on constituera, préférentiellement, sept groupes G1 à G7. Ces groupements ont uniquement pour but de simplifier la gestion, notamment de réduire l'occupation en mémoire des descripteurs de fichiers. Par exemple, la lecture de balance pourra être attribuée au groupe G1. Ceci signifiera que si un mode de protection selon l'invention est prévu pour un groupe, ce mode de protection s'appliquera aussi bien, dans le cas du groupe G1, pour la lecture d'une information que pour la lecture de balance. De même la fonction 30 de débit plafonné peut être attribuée au groupe G6 de débit. Ceci signifie que le mode de protection attribué au mode G6, et à appliquer au groupe G6, s'appliquera dans ce cas qu'il s'agisse d'une opération de débit ou d'une opération de débit plafonné.

La figure 3a montre un mode de protection par code secret. Dans ce cas, il y a l'envoi d'un code secret CS du lecteur à la carte dans une opération 31 puis vérification dans la carte, dans une opération 32, de ce que le code secret reçu est compatible avec ce qui est attendu par la carte. Selon le résultat de l'opération 32, le mode de sécurité conduit à un rejet 33 ou à une acceptation 34 de la fonction et à une exécution de celle-ci. On notera que le code secret peut être envoyé crypté ou non. En pratique le code secret transite par la liaison à laquelle est connectée l'interface 12. Dans la suite de cet exposé quand on parlera de cryptage, il s'agira d'une transformation d'une chaîne de caractères en une autre chaîne de caractères selon un mode connu de la carte et du lecteur. Par opposition par chiffrement on entendra un mode connu par l'un seulement de ces deux organes.

Dans le processus d'authentification de la figure 3b, on retrouve sensiblement les mêmes opérations sauf que l'envoi 36 d'une clé secrète du lecteur à la carte est précédé par l'envoi 35 d'un aléa de la carte au lecteur (ou réciproquement). L'aléa est alors chiffré dans une opération 36 par le lecteur. Le chiffrage est effectué au moyen dé la clé secrète du lecteur. En principe une telle opération est faite une fois: au démarrage d'une session de transaction entre une carte à puce et un lecteur.

Dans la figure 3c, le mode de sécurisation de message comporte un chiffrage de message par le lecteur dans une opération 37. Au cours d'une opération 38, le message en clair, ou au moins une partie en clair de ce message, et le message chiffré sont envoyés à la carte. Dans une opération 39, la carte décrypte le message et le compare à la partie en clair qu'elle a reçue. La comparaison au cours d'une opération 40 provoque le rejet 33 ou l'acception 34 comme précédemment. La particularité de ce mode de sécurisation est qu'il est fait à chaque échange entre la carte et le lecteur. Le message peut comporter une partie de données et une partie de commande, la partie qui est cryptée peut être toute ou partie de l'une ou l'autre ou de l'une et l'autre de ces commandes ou données. Par ailleurs l'opération peut se passer à l'envers également, de la carte à puce vers le lecteur plutôt que du lecteur vers la carte à puce.

Un mode de protection, au sens de l'invention, est donc la suite des instructions exécutées par le processeur 10 pour provoquer chacune des vérifications précédentes.

Ayant expliqué ce qu'était un mode de protection, nous allons expliquer maintenant le fonctionnement du procédé de l'invention.

Les descripteurs de fichier 14 comportent, selon l'invention, des descripteurs 41 à 43 affectés à des fichiers respectivement 44 à 46. Chaque descripteur, donc le descripteur 41 affecté au fichier 44, comporte, trois mots mémoires de mode 47 à 49. Il comporte autant de mots mémoires de mode qu'il y a de modes de protections différents. Ici, avec les figures 3a à 3c, on en a décrit trois, mais on pourrait en prévoir d'autres. Dans un exemple, les mots mémoires de mode sont des octets, bien que cela ne soit pas nécessaire. Chaque mot mémoire 47, chaque octet, comporte un nombre de bits au moins égal au nombre de fonctions (ou de groupes de fonctions) désignables. Il y a donc une corrélation étroite entre le fait de choisir un nombre de fonctions inférieur ou égal à huit (de préférence au plus égal à sept) , et le fait de retenir pour les mots mémoire de mode des octets.

Si le nombre de fonctions est supérieur, on pourra retenir pour les mots mémoire de mode deux octets, auquel cas on aura la possibilité de définir jusqu'à seize types de fonctions différents.

Par convention, chacun des mots mémoire de mode 47 à 49 est affecté à un mode de protection donnée. Ainsi, le mot 47 est affecté au mode de protection par code secret mis en oeuvre par le programme 19 et montré sur la figure 3a, le mot 48 est affecté au mode d'authentification mis en oeuvre par le programme 20 et montré sur la figure 3b, et le mot 49 est attribué au mode de sécurisation de message protégé par le programme 21 et montré sur la figure 3c.

Dans chaque mot mémoire de mode, les bits sont rangés d'une façon qui correspond à un ordre prédéterminé des fonctions, ou des groupes de fonctions, 22 à 28. Par exemple, le bit à droite de chaque mot 47 à 49 est attribué à la fonction 22, le bit qui le suit en allant vers la gauche est attribué à la fonction 23 et ainsi de suite, le septième est attribué à la fonction 28.

Certains des bits des mots mémoires de mode sont portés à un état actif. Ici, on a symbolisé cet état actif par la présence d'un 1. L'état inactif est équivalent à un zéro binaire qui correspond à une case vide. La présence d'un 1 dans le premier bit à droite du mot mémoire 47 du descripteur 41 signifie que le fichier 44 devra, en ce qui concerne les opérations ou les fonctions du groupe G1, 22 (lecture) être traité selon le mode de code secret 19. La présence d'un 1 dans le premier bit à droite du mot mémoire de mode 48 signifie également que le fichier 44 doit être traité en ce qui concerne les fonctions du groupe G1, 22 (lecture) par le mode de protection d'authentification: programme 20, figure 3b. De même, le mot mémoire 49 possédant un 1 dans le premier bit à droite indique que le fichier 44 doit également être protégé pour les opérations de lecture du groupe G1, 22 par une opération de sécurisation de message. De ce fait, à chaque lecture du fichier 44, il faut lancer les trois modes de protection.

Le mot 47 indique également que le fichier 44 doit être traité en ce qui concerne l'opération de réhabilitation, groupe G5 26, par le mode de protection de code secret. Le mot 48 indique que le fichier 44 doit être traité en ce qui concerne l'écriture et l'effacement, groupe G2 23, par le mode d'authentification. Le mot mémoire 49 indique que le fichier 44 doit être traité en ce qui concerne la suppression et la création, groupe G3 24, et en ce qui concerne l'invalidation, groupe G4 25, par la procédure de sécurisation de message.

Autrement dit, chaque fois que le processeur 10 veut lancer une des fonctions présentes dans la mémoire 16, il regarde d'une part à quel groupe de fonctions ces fonctions appartiennent (à moins qu'elle ne soit individualisée) et il regarde en correspondance dans les mots mémoires de mode du descripteur s'il existe un bit à l'état actif par un rang qui correspond à la fonction envisagée. Par exemple, pour les fonctions 27 et 28 de débit et crédit il n'y a ici aucun mode de protection particulier envisagé. L'exécution de la fonction de débit ou de la fonction de crédit peut être lancée normalement. Par contre, s'il repère la présence d'un bit actif, le processeur doit lancer la vérification correspondante.

Comme on l'a vu précédemment, tous les modes de protection comportent des opérations de chiffrement, déchiffrement, et vérification. Les clefs de ces chiffrements, déchiffrements, et vérifications sont dans la pratique stockées dans la mémoire 15. Elles pourraient être stockées dans le descripteur mais cela ne serait pas judicieux parce qu'une clé est normalement un ensemble très imposant de bits. Par exemple, il est connu qu'une clé de chiffrement puisse contenir jusqu'à 128 octets. Lorsqu'une telle vérification est nécessaire, le descripteur 41 comporte un ensemble 50 de mots mémoire de fonction comportant des références à des clés contenues dans la mémoire 15 et qu'il faut mettre en oeuvre pour lancer le mode de protection requis.

Tout d'abord le mode de rangement des mots mémoire 50 dans le descripteur 41 est lié au nombre et à la position des bits actifs dans les mots mémoire 47 à 49. Ainsi, le premier mot mémoire de fonction 51 présent dans l'ensemble 50 est relatif au premier bit à l'état actif (le bit de droite) du mot mémoire 47. En conséquence, ce premier mot mémoire de fonction 51 est relatif au bit à l'état actif dans la cellule mémoire 52 du mot mémoire 47. Comme le mot mémoire 47 est relatif au mode de protection de code secret, la référence contenue dans le mot mémoire de fonction 51 est une référence de type code secret. Comme elle concerne le premier bit, elle est relative au groupe G1 22. C'est pour cette raison que l'octet 51 porte la référence ref CS G1. De même, l'octet 53 où le mot mémoire 53 est relatif au bit 54 qui concerne le groupe G5 26. Le groupe 55 des mots mémoires de fonction est relatif au mode de protection par code secret. Il est suivi par un groupe 56 de mots mémoires de fonction relatif au mode de protection par authentification, et par le groupe 57 de mots mémoires de fonction relatif au mode de protection par sécurisation de message.

Dans le groupe 56, les mots mémoires 58 et 59 sont relatifs aux bits 60 et 61 du mot 48. De même dans un groupe 57, les mots 62 à 64 sont relatifs aux bits 65 à 67 du mot 49. Les mots mémoires de fonction comportent une référence à une clé à utiliser, dans le mode de protection concerné pour appliquer la fonction aux données du fichier auxquelles se rapportent le descripteur. On repère dans les mots mémoires de fonctions respectivement 51, 53, 58, 59, 62-64, une référence associée à un mode par la correspondance respective entre la place parmi les bits actifs de mode 52, 54, 60, 61, 65-67 et la place du mot mémoire de fonction parmi les mots mémoires de fonctions.

On observe que cette manière de faire a imposé la présence de trois mots mémoire de mode: les mots 47, 48 et 49, et sept mots mémoire de fonction, les mots: 51, 53, 58, 59, 62, 63, 64. Au total cela fait 10 mots, soit dans l'exemple préféré 10 octets qui sont à comparer aux 21 mots, ou 21 octets, évoqués dans l'état de la technique. Le repérage des références de code secret ou de code d'authentification ou de code de sécurisation de message se font en comptant dans un mot mémoire de mode le nombre de bits actif et en attribuant un rang dans l'ensemble 50 au mot mémoire de fonction qui suivent l'ordre des bits actifs des mots mémoire de mode.

Avec ces références, le microprocesseur 10 va lire les codes secrets dans la mémoire 15 pour ensuite exécuter ses actions de chiffrement, déchiffrement et vérification.

L'invention présente encore deux particularités. Une première particularité concerne un bit dit de défaut 68. Ce bit 68 peut être un des bits d'un des octets servant de mots mémoire de mode 47 à 49 puisque dans un exemple on a limité les fonctions à sept. La signification du bit de défaut est la suivante. Si un bit de mode relatif à un groupe de fonctions est à l'état inactif, selon ce qui a été dit précédemment, la mise en oeuvre de la fonction concernée est libre. Le bit de défaut permet de moduler le sens de ce mot libre. Si le bit 68 est effectivement à zéro, dans un état inactif donc, on admettra que l'exécution de la fonction est effectivement libre. Elle peut être exécutée. Par contre si le bit de défaut 68 est à l'état actif, cela voudra dire que toutes les fonctions qui ne sont pas autorisées sous condition d'un mode de protection donné sont interdites. Dans le cas présent, la fonction 1 et la fonction 5 sont concernées par le mode du mot 47, les fonctions 1 et 2 par le mode du mot 48 et les fonctions 1, 3 et 4 par le mode du mot 49. En conséquence, seules les fonctions 6 et 7 seraient, dans cet exemple, libres. Ce seraient les seules qui seraient autorisées sans sécurité ou bien complètement interdites en fonction de l'état 0 ou 1 du bit de défaut 68.

En outre, chaque référence 51, 53, ... à un code secret peut être codée sur sept bits. Le bit 69 d'entête du mot de référence est alors un bit de validation. Le bit de validation a le même genre de conséquence que le bit de défaut. Selon son état: actif ou inactif, l'exécution de la fonction sera rejetée purement et simplement ou bien cette exécution de fonction sera mise en oeuvre sous condition de succès au mode de protection concerné.

Ainsi, pour le fichier 44, pour la fonction de lecture (groupe de fonctions G1, programme 22, bit 52), le code secret du mot mémoire de fonction 51, ref CS G1, sera utilisé si le bit 69 du mot mémoire 51 est à l'état inactif. Par contre, la référence ne sera pas utilisée, on ne pourra pas lire le fichier 44, si le bit 69 est à l'état actif.

La figure 4 montre en résumé les opérations décrites jusqu'à présent. Le procédé selon l'invention débute par la requête en exécution d'une nouvelle fonction, l'étape 70. A la suite de cette étape, le système d'exploitation lance un test 71 pour savoir s'il existe un bit à l'état actif dans le descripteur 41 du fichier 44 concerné et pour la fonction concernée. Si ce n'est pas le cas, par exemple s'il s'agit d'une fonction débit ou crédit, il regarde avec un test 71 quelle est la valeur du bit de défaut 68. Si le bit de défaut testé par un test 72 est actif, il provoque un rejet 33 de l'exécution. Par contre, si le bit de défaut 68 n'est pas actif, l'exécution de la fonction est réalisée à l'étape 73.

S'il existait un bit actif dans les mots mémoires de mode, mots 47 à 49, pour le fichier et la fonction concernés le système d'exploitation va d'abord rechercher quelle est le mot mémoire de fonction qui correspond au mode de protection. Tout simplement, le système d'exploitation compte les bits actifs dans les mots 47, 48, 49 pour arriver jusqu'au mot mémoire de mode qu'il concerne. Avec le rang ainsi obtenu, il recherche dans l'ensemble 50 la référence au mode de protection concerné. Dans cette référence, en un test 74, il recherche si le bit 69 de validation de la référence est actif. Si c'est le cas, le système d'exploitation provoque le rejet 33 de l'exécution de la fonction projetée. Si ce n'est pas le cas, il provoque au cours d'une opération 75 la mise en oeuvre du mode de protection trouvé. La mise en oeuvre de cette protection peut être elle-même suivie d'un échec ou d'un succès.

La mise en oeuvre de la protection comporte comme étape celle d'utiliser la référence présente dans les mots mémoire de fonction à titre d'adresse- pour rechercher dans la mémoire 15 le code secret, le code d'authentification, ou la clé de sécurisation à utiliser pour mener à bien le chiffrement ou déchiffrement impliqués par l'opération de vérification projetée.

Au moment de la personnalisation des fichiers, les bits 68 et 69 sont à l'état inactifs. Par la suite, après vérification de conformité on peut en les rendant actifs, invalider des fonctions qu'on ne veut plus autoriser. Par exemple, en cas de fraude sur la carte, le système d'exploitation peut prévoir de faire basculer ces bits 68 ou 69 pour bloquer la carte.

Jusqu'à présent on a indiqué que, le nombre de modes étant faible, en général trois modes, et le nombre de fonctions étant plus élevé, il était préférable d'organiser le descripteur de telle façon qu'il comporte autant de mots mémoires de mode (obligatoire) qu'il y a de modes et, d'une manière variable de mots mémoires de fonction impliqués. Il est tout aussi possible de créer autant de mots mémoires de fonction obligatoire) qu'il y a de fonctions à réaliser et de créer des mots mémoires de mode chaque fois que la conjonction des deux se justifie. En effet, le caractère éminemment complémentaire des sous-programmes 19 à 21 et 22 à 30 rend cette permutation tout à fait envisageable. Pour clarifier, bien que les modes de protection soient différents des fonctions, il est possible dans cette description de remplacer mode par fonction et fonction par mode pour le même résultat.

## Revendications

1. Procédé de gestion sécurisée d'une mémoire (15-17) dans lequel
- on affecte à des fichiers (44) de la mémoire des descripteurs (41) de fichiers,
- ces descripteurs de fichiers contiennent des informations (47-49) de modes de sécurité auxquels il faut souscrire pour appliquer des fonctions (22-29) de traitement à des données enregistrées dans les fichiers,
- et on gère (40) la sécurité des fichiers de la mémoire en fonction du contenu de ces descripteurs de fichiers, **caractérisé en ce que**
- on répartit les modes de sécurité en M types (19-21) distincts et on répartit les fonctions en N types (22-28) distincts,
- on crée dans le descripteur de chaque fichier un premier groupe (47-49) de M mots mémoires de mode, la longueur en bits des mots mémoires de mode étant au moins égale au nombre N de types distincts de fonctions,
- les fonctions sont angées selon un ordre (G1-G7), les rangs (52-54) des bits dans les mots mémoires de mode correspondent à cet ordre,
- les bits des mots mémoires de mode sont portés à un état actif ou inactif selon qu'un mode de sécurité (47) doit ou ne doit pas être mis en oeuvre lors de l'application d'une fonction (G1) à un fichier concerné par un descripteur.

2. Procédé selon la revendication 1, **caractérisé en ce que**
- on crée dans le descripteur de chaque fichier un deuxième groupe (50) de mots mémoires de fonction en un nombre variable, le nombre variable des mots mémoires de fonction étant égal au nombre de bits actifs recensés dans les mots mémoires de mode,
- les mots mémoires de fonctions comportant une référence d'une clé (ref C5 G1) à utiliser, dans le mode de sécurité concerné, pour appliquer la fonction aux données du fichier auquel se rapporte le descripteur.

3. Procédé selon la revendication 2, **caractérisé en ce que**
- on repère dans les mots mémoires de fonctions une référence associée à un mode par la correspondance entre la place (52) parmi les bits actifs de mode dans les mots mémoire de mode et la place (51) du mot mémoire de fonction dans les mots mémoires de fonction.

4. Procédé selon l'une des revendications 1 à 3, **caractérisé en ce que**
- on place dans un mot mémoire de mode un bit (68) de défaut pour déterminer le mode de protection de toutes les fonctions pour lesquelles aucun bit dans un mot mémoire de mode n'est à l'état actif.

5. Procédé selon l'une des revendications 1 à 4, **caractérisé en ce que**
- on enregistre dans les mots mémoires de fonction un bit de validation (69) pour autoriser ou non la mise en oeuvre du mode de sécurité déterminé au fichier concerné.

6. Procédé selon les revendications 1 à 5 ensemble, **caractérisé en ce que**
- on recherche (71) dans un descripteur l'existence d'un bit de mode actif pour une fonction envisagée,
- s'il n'y en pas, on teste (72) la valeur du bit de défaut et on autorise (73) ou non (33) l'exécution de la fonction selon la valeur du bit de défaut,
- s'il y en a un, on teste (74) la valeur du bit de validation de la référence de clé contenue dans le mot mémoire de fonction,
- selon la valeur de ce bit de validation, soit on met en oeuvre (75) le mode de sécurité préalablement à l'application (73) de la fonction au fichier concerné par le descripteur, soit on rejette (33) l'application projetée.

7. Procédé selon l'une des revendications 1 à 6, **caractérisé en ce que**
- les mots mémoires sont des octets.

8. Procédé selon l'une des revendications 1 à 7, **caractérisé en ce que** les modes de sécurité sont
- soit un mode (47) avec envoi, crypté ou non, d'un code secret entre une carte à puce et un lecteur de carte à puce,
- soit un mode (48) avec envoi préalable, crypté ou non, d'un aléa entre une carte à puce et un lecteur de carte à puce, suivi d'un envoi, crypté ou non, d'un code secret entre le lecteur de carte à puce et la carte,
- soit un mode (49) avec envoi, crypté ou non, entre une carte à puce et un lecteur de carte à puce d'un message dont une partie est transmise en clair et sous une forme chiffrée par une clé secrète.

## Patentansprüche

1. Gesichertes Verwaltungsverfahren eines Speichers (15-17), bei dem
- man Dateien (44) des Speichers Dateibeschreiber (41) zuordnet,
- diese Dateibeschreiber. Sicherheitsmodus-Informationen (47-49) enthalten, die beachtet werden müssen, um auf die in den Dateien registrierten Daten Verarbeitungsfunktionen (22-29) anzuwenden,
- und bei dem man die Sicherheit der Dateien des Speichers entsprechend dem Inhalt dieser Dateibeschreiber verwaltet (40), **dadurch gekennzeichnet, dass**
- man die Sicherheitsmodi in M verschiedene Typen (19-21) und die Funktionen in N verschiedene Typen (22-28) unterteilt,
- man im Beschreiber einer jeden Datei eine erste Gruppe (47-49) von M Modusspeicherworten erstellt, wobei die Länge in Bits der Modusspeicherworte mindestens der Anzahl N von verschiedenen Funktionstypen entspricht,
- die Funktionen nach einer Reihenfolge (G1-G7) geordnet sind, wobei die Bitreihen (52-54) in den Modusspeicherworten dieser Reihenfolge entsprechen,
- die Bits der Modusspeicherworte aktiviert oder deaktiviert werden, je nachdem ob bei der Anwendung einer Funktion (G1) auf eine von einem Beschreiber betroffene Datei ein Sicherheitsmodus (47) implementiert werden muss oder nicht.

2. Verfahren nach Anspruch 1, **dadurch gekennzeichnet, dass**
- man im Beschreiber einer jeden Datei eine zweite Gruppe (50) von Funktionsspeicherworten in variabler Anzahl erstellt, wobei die variable Anzahl der Funktionsspeicherworte der Anzahl der in den Modusspeicherworten gezählten aktiven Bits entspricht,
- wobei die Funktionsspeicherworte eine Referenz auf einen im betroffenen Sicherheitsmodus zu benutzenden Schlüssel (Ref. C5 G1) umfassen, um die Funktion auf die Daten der Datei anzuwenden, auf die sich der Beschreiber bezieht.

3. Verfahren nach Anspruch 3, **dadurch gekennzeichnet, dass**
- man in den Funktionsspeicherworten eine einem Modus zugeordnete Referenz ermittelt, durch Übereinstimmung zwischen dem Platz (52) unter den aktiven Modusbits in den Modusspeicherworten und dem Platz (51) des Funktionsspeicherworts in den Funktionsspeicherworten.

4. Verfahren nach einem der Ansprüche 1 bis 3, **dadurch gekennzeichnet, dass**
- man in einem Modusspeicherwort ein Fehlerbit (68) einfügt, um den Schutzmodus aller Funktionen zu ermitteln, für die kein Bit in einem Modusspeicherwort im aktiven Zustand ist.

5. Verfahren nach einem der Ansprüche 1 bis 4, **dadurch gekennzeichnet, dass**
- man in den Funktionsspeicherworten ein Bestätigungsbit (69) aufzeichnet, um die Implementierung des bestimmten Sicherheitsmodus auf die betroffene Datei zu gestatten oder nicht.

6. Verfahren nach den Ansprüchen 1 bis 5 gemeinsam, **dadurch gekennzeichnet, dass** man
- in einem Beschreiber die Existenz eines aktiven Modusbits für eine geplante Funktion sucht (71),
- wenn keiner vorhanden ist, den Wert des Fehlerbits testet (72) und die Ausführung der Funktion gemäss dem Wert des Fehlerbits gestattet (73) oder nicht (33),
- wenn einer vorhanden ist, den Wert des Bestätigungsbits der im Funktionsspeicherwort vorhandenen Schlüsselreferenz testet (74),
- je nach Wert des Bestätigungsbits entweder den Sicherheitsmodus vor der Anwendung (73) der Funktion auf die vom Beschreiber betroffene Datei implementiert (75) oder die geplante Anwendung ablehnt (33).

7. Verfahren nach einem der Ansprüche 1 bis 6, **dadurch gekennzeichnet, dass**
- die Speicherworte Bytes sind.

8. Verfahren nach einem der Ansprüche 1 bis 7, **dadurch gekennzeichnet, dass** die Sicherheitsmodi die folgenden sind:
- entweder ein Modus (47) mit Versand, verschlüsselt oder nicht, eines Geheimcodes zwischen einer Chipkarte und einem Chipkarten-Lesegerät,
- oder ein Modus (48) mit vorherigem Versand, verschlüsselt oder nicht, eines Zufalls zwischen einer Chipkarte und einem Chipkarten-Lesegerät, gefolgt von einem Versand, verschlüsselt oder nicht, eines Geheimcodes zwischen dem Chipkarten-Lesegerät und der Karte,
- oder ein Modus (49) mit Versand, verschlüsselt oder nicht, zwischen einer Chipkarte und einem Chipkarten-Lesegerät einer Meldung, wovon ein Teil in Klartext und in einer von einem Geheimschlüssel chiffrierten Form übertragen wird.

## Claims

1. A method for the protected management of a memory (15-17) in which
- file descriptors (41) are allocated to files (44) in the memory,
- these file descriptors contain security mode information (47-49) to which it is necessary to subscribe in order to apply processing functions (22-29) to data recorded in the files,
- and the security of the files in the memory is managed (40) according to the content of these file descriptors, **characterised in that**
- the security modes are divided into M distinct types (19-21) and the functions are divided into N distinct types (22-28),
- a first group (47-49) of M mode memory words is created in the descriptor of each file, the length in bits of the mode memory words being at least equal to the number N of distinct types of functions,
- the functions are ranked in an order (G1-G7), the ranks (52-54) of the bits in the mode memory words corresponding to this order,
- the bits of the mode memory words are changed to an active or inactive state depending on whether a security mode (47) must or must not be used during the application of a function (G1) to a file to which a descriptor relates.

2. A method according to Claim 1, **characterised in that**
- a second group (50) of function memory words in variable number are created in the descriptor of each file, the variable number of function memory words being equal to the number of active bits counted in the mode memory words,
- the function memory words containing a reference of a key (ref C5 G1) to be used, in the security mode concerned, for applying the function to the data in the file to which the descriptor relates.

3. A method according to Claim 2, **characterised in that**
- there is located, in the function memory words, a reference associated with a mode by correspondence between the place (52) amongst the active mode bits in the mode memory words and the place (51) of the function memory word in the function memory words.

4. A method according to one of Claims 1 to 3, **characterised in that**
- a default bit (68) is placed in a mode memory word in order to determine the protection mode of all the functions for which no bit in a mode memory word is at the active state.

5. A method according to one of Claims 1 to 4, **characterised in that**
- a validation bit (69) is recorded in the function memory words in order to enable or not the implementation of the security mode determined in the file concerned.

6. A method according to Claims 1 to 5 together, **characterised in that**
- the existence of an active mode bit for an envisaged function is sought (71) in a descriptor,
- if there is not one, the value of the default bit is tested (72) and the execution of the function is authorised (73) or not (33) according to the value of the default bit,
- if there is one, a test (74) is carried out on the value of the bit validating the key reference contained in the function memory word,
- according to the value of this validation bit, either the security mode is implemented (75) prior to the application (73) of the function to the file to which the descriptor relates, or the projected application is rejected (33).

7. A method according to one of Claims 1 to 6, **characterised in that**
- the memory words are bytes.

8. A method according to one of Claims 1 to 7, **characterised in that** the security modes are
- either a mode (47) with the sending, enciphered or not, of a secret code between a smart card and a smart card reader,
- or a mode (48) with the prior sending, enciphered or not, of a random value between a smart card and a smart card reader, followed by a sending, enciphered or not, of a secret code between the smart card reader and the card,
- or a mode (49) with the sending, enciphered or not, between a smart card and a smart card reader, of a message, part of which is transmitted in clear and in a form encoded by a secret key.
